# FASCICULE DE BREVET EUROPEEN

(11) **EP 3 844 415 B1**
(45) Date de publication et mention de la délivrance du brevet: **18.01.2023**
(21) Numéro de dépôt: 19753156.9
(22) Date de dépôt: 09.07.2019
(51) Int. Cl.: F16D 48/06

(54) **PROCEDE DE COMMANDE DE L'ETAT DE COUPLAGE D'UNE MACHINE DE TRACTION A UN TRAIN DE ROUES DE VEHICULE AUTOMOBILE**
VERFAHREN ZUR STEUERUNG DES ZUSTANDES DER KUPPLUNG EINER ZUGMASCHINE ZU EINEM RADSATZ EINES KRAFTFAHRZEUGS
METHOD FOR CONTROLLING THE STATUS OF THE COUPLING OF A TRACTION MACHINE TO A WHEELSET OF A MOTOR VEHICLE

(30) Priorité: 28.08.2018 FR 1857728
(43) Date de publication de la demande: 07.07.2021
(73) Titulaire: PSA Automobiles SA, 78300 Poissy (FR)
(72) Inventeur: MILHAU, Yohan, 78630 ORGEVAL (FR); GRIGORIE, Simona Corina, 92150 Suresnes (FR); ROCQ, Gaetan, 78125 LA BOISSIERE ECOLE (FR); BARDET, Arnaud, 78150 LE CHESNAY (FR)
(86) Numéro de dépôt international: PCT/FR2019/051716
(87) Numéro de publication internationale: WO 2020/043967

(56) Documents cités:
- WO-A1-2011/080439
- FR-A1- 3 056 661
- US-A- 4 715 482

## Description

Le domaine de l'invention concerne un procédé de commande de l'état de couplage d'une machine de traction d'un véhicule automobile à un train de roues du véhicule. Voir WO2011080439, FR3056661 et US4715482.

L'invention appartient au domaine des véhicules automobiles à groupe motopropulseur hybride, électrique ou à motorisation thermique. Conventionnellement, ces groupes motopropulseurs sont équipés d'un ou plusieurs moyens de couplage permettant d'accoupler et de découpler une machine de traction et un train de roues du véhicule, tels un dispositif d'embrayage ou de crabotage.

La gestion du pilotage d'un moyen de couplage est essentielle pour la coordination des stratégies énergétiques du groupe motopropulseur visant à optimiser la consommation énergétique du véhicule, en particulier lorsque ce dernier autorise plusieurs modes de traction, tels un mode de roulage thermique, mode de roulage hybride ou mode de roulage totalement électrique. On connait par exemple la demande de brevet internationale WO2011/080439A1 déposée par la demanderesse décrivant un procédé de désaccouplement d'un dispositif de crabotage.

Les stratégies de couplage sont problématiques car elles doivent prendre en compte simultanément plusieurs demandes d'état de couplage issues de différentes fonctions de pilotage du groupe motopropulseur. De plus, pour éviter les nuisances d'agréments en roulage et d'instabilité des signaux de commande, les demandes d'état de couplage sont généralement soumises à la confirmation de paramètres de validation. On connait par exemple la demande internationale WO2014/064371A1 déposée par la demanderesse qui décrit un tel procédé de commande d'accouplage/découplage. Selon un tel procédé, les demandes d'état de couplage sont conditionnées au franchissement de plusieurs seuils de couplage en couple à la roue. Or, lors d'une phase d'accélération ou de décélération présentant un gradient de couple élevé, un changement d'état transitoire de courte durée est susceptible de perturber le signal de commande final du fait du franchissement successif de plusieurs seuil de couplage. A répétition, ces franchissement successifs peuvent endommager le moyen de couplage et nuire aux performances des stratégies énergétiques du véhicule.

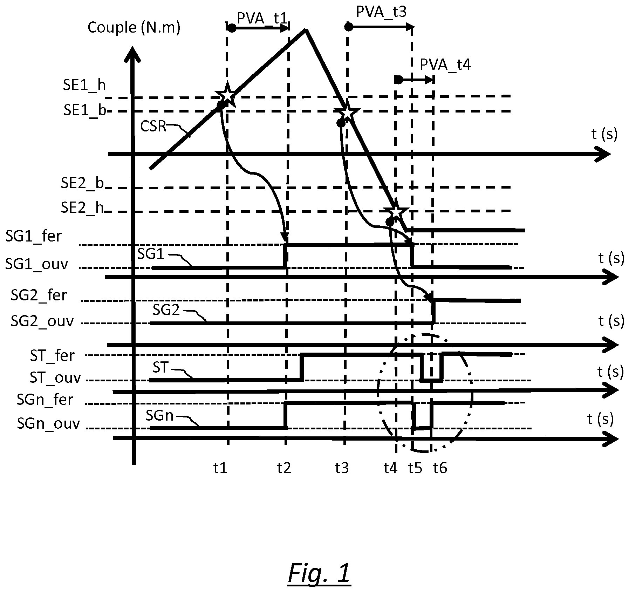

Pour illustrer clairement cette problématique d'oscillation du signal de commande de couplage, on vient présenter en figure 1 un graphique décrivant le comportement d'un procédé de commande d'un dispositif à crabotage conformément à une solution telle que décrite dans la demande internationale mentionnée ci-avant. Le graphique représente une séquence de roulage impliquant le déclenchement de trois demandes d'état de couplage successives du dispositif de crabotage. Le graphique représente sur la partie supérieure l'évolution temporelle d'une consigne de couple CSR en N.m à appliquer par le train de roues relié à une machine électrique par l'intermédiaire du dispositif de crabotage. Similairement au document WO2014/064371A1, en couple positif des demandes d'ouverture et de fermeture sont respectivement déclenchées par un premier seuil bas de couplage SE1_b et un premier seuil haut de couplage SE1_h, tandis qu'en couple négatif des demandes d'ouverture et de fermeture sont respectivement déclenchées par un deuxième seuil bas de couplage SE2_b et un deuxième seuil haut de couplage SE2_h, en considération des valeurs absolues en couple.

Ainsi, selon ce procédé de commande à l'instant t1 le franchissement du seuil SE1_h en montée de couple déclenche une demande de fermeture qui est exécutée à l'instant t2 une fois qu'un paramètre de validation PVA_t1 est confirmé. A l'instant t3, le franchissement du seuil SE1_b en descente de couple déclenche une demande d'ouverture qui est exécutée à l'instant t5 une fois que le paramètre de validation PVA_t3 est confirmé. Et à l'instant t4, le franchissement du seuil SE2_h en montée de couple négatif (en référence à la valeur absolue) déclenche une demande de fermeture qui est exécutée à l'instant t6 une fois que le paramètre de validation PVA_t4 est confirmé. Les étoiles ajoutées sur le graphique indiquent les instants de détection des demandes d'état de couplage mentionnées ci-avant.

En partie inférieure du graphique, l'état des signaux de commandes pilotés par le procédé sont représentés au cours de cette même séquence de roulage. Les signaux SG1, SG2, SGn sont des signaux de consigne logique. Le signal SG1 pilote les demandes de couplage en couple positif selon un premier état de couplage d'ouverture SG1_ouv et un deuxième état de couplage de fermeture SG1_fer, tandis que le signal SG2 pilote les demandes de couplage en couple négatif selon un premier état de couplage d'ouverture SG2_ouv et un deuxième état de couplage de fermeture SG2_fer. Le signal de commande de couplage SGn pilote l'état de couplage d'ouverture SGn_ouv et l'état de couplage de fermeture SGn_fer et résulte de la synthèse des signaux SG1, SG2 (combinaison logique de type « OU ») pilotant le dispositif de crabotage. Le signal ST représente l'état de couplage piloté du moyen de couplage (état de couplage d'ouverture ST_ouv et de fermeture ST fer), lequel est décalé d'un temps de réponse par rapport au signal de commande final SGn.

Cette séquence présente un changement d'état indésirable du signal de commande final SGn, lequel est entouré en trait pointillé sur la figure 1, résultant du franchissement successif du seuil de couplage SE1_b et SE2_h. Ce changement d'état de courte durée est source de nuisances mécaniques et de consommation d'énergie électrique. De plus, à répétition cette oscillation est susceptible d'endommager le dispositif de crabotage.

Un objectif de la présente invention est d'éviter les problèmes précités, à savoir les nuisances d'agréments lors du roulage provoquées par des demandes d'ouverture et fermeture non stabilisées, ainsi que les oscillations de courtes durées durant le franchissement successif de plusieurs seuils de couplage. Un autre objectif de l'invention est d'améliorer la stabilité des signaux de commandes de couplage pour réduire notamment la consommation énergétique du véhicule.

Plus précisément, l'invention concerne un procédé de commande de l'état de couplage d'une machine de traction d'un véhicule automobile à un train de roues du véhicule, le procédé comportant la détection d'une demande d'un état de couplage cible à un instant, le procédé étant remarquable en ce qu'il comporte en outre les étapes de :
- la détermination de l'état de couplage piloté de la machine de traction au train de roues à l'instant de la détection de ladite demande et,
- la commande de ladite demande est autorisée dès l'instant de la détection de ladite demande lorsque l'état de couplage piloté à l'instant de la détection est identique à l'état de couplage cible de ladite demande.

Selon une variante préférentielle, lorsque l'état de couplage piloté est différent de l'état de couplage cible, alors le procédé comporte en outre le calcul d'un paramètre de validation de ladite demande d'état de couplage cibl et la commande de ladite demande est autorisée à partir de l'instant que le paramètre de validation respecte un critère de validation prédéterminé.

Selon un premier mode de détermination du procédé dans lequel le couplage de la machine de traction au train de roues est opérable selon trois états de couplage prédéterminés pouvant être un premier état ouvert, un deuxième état fermé et un troisième état intermédiaire entre le premier et deuxième état, la détermination de l'état de couplage piloté à l'instant de la détection de ladite demande consiste à détecter l'état de couplage en cours d'exécution parmi les premier, deuxième et troisième états.

Selon une variante de ce premier mode, lorsque l'état de couplage en cours d'exécution est le troisième état intermédiaire, la commande de ladite demande est autorisée dès l'instant de la détection de ladite demande.

Selon une variante, l'état de couplage piloté à l'instant de la détection de ladite demande est déterminé à partir du signal de mesure d'un capteur de position d'un actionneur pilotant le couplage de la machine de traction au train de roues.

Selon un deuxième mode de détermination du procédé dans lequel le couplage de la machine de traction au train de roues est piloté par un module de pilotage en fonction d'une pluralité d'états de pilotage prédéterminés séquentiels pour atteindre l'état de couplage cible, la détermination de l'état de couplage piloté à l'instant de la détection de ladite demande consiste à détecter l'état de pilotage prédéterminé qui est en cours d'exécution parmi lesdits états de pilotage prédéterminés.

De plus, selon une variante de ce deuxième mode, lorsque l'état de pilotage prédéterminé en cours d'exécution est un état de pilotage transitoire vers l'état de couplage cible, la commande de ladite demande est autorisée dès l'instant de la détection de ladite demande.

Selon un troisième mode de détermination du procédé, l'état de couplage piloté à l'instant de la détection de ladite demande est déterminé à partir d'une consigne d'un signal de commande de positionnement d'un actionneur opérant le couplage de la machine de traction au train de roues.

De plus, selon une variante, le signal de commande est un signal logique codant un état ouvert et un état fermé.

Il est prévu selon l'invention un véhicule automobile comportant une unité de commande comportant des moyens de mettre en oeuvre le procédé de commande selon l'un quelconque des modes de réalisation précédents.

Grâce à l'invention, le pilotage d'un dispositif d'embrayage, d'une boite de vitesses ou d'un dispositif de crabotage présente une stabilité améliorée contribuant à optimiser l'agrément de roulage du véhicule. De plus, grâce au procédé les performances énergétiques du véhicule sont améliorées.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
· la figure 1 déjà décrite précédemment lors de la présentation de l'état de la technique est un graphique représentant le comportement des demandes de couplage et signaux de commande de couplage lors de l'exécution d'un procédé de commande connu;
· la figure 2 représente schématiquement une architecture hybride de véhicule automobile apte à mettre en oeuvre le procédé de commande selon l'invention;
· la figure 3 représente schématiquement un organigramme des fonctions de pilotage pour commander le couplage d'un moyen de couplage conformément à l'invention;
· la figure 4 est un organigramme représentant un algorithme du procédé de commande selon l'invention;
· la figure 5 est un graphique représentant le comportement des demandes de couplage et signaux de commande de couplage lors de l'exécution du procédé de commande conformément à l'invention.

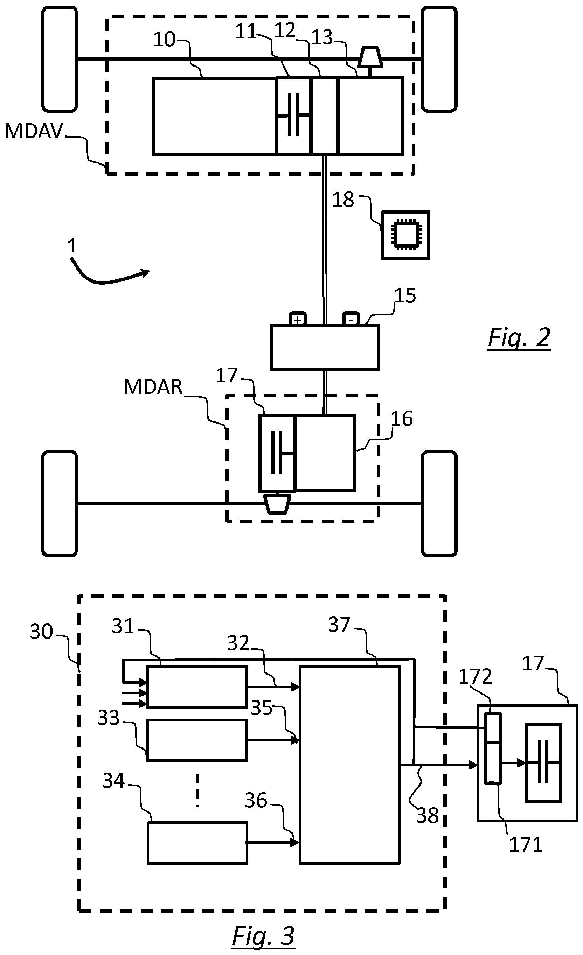

En figure 2, nous présentons schématiquement tout d'abord une architecture hybride électrique 1 de véhicule automobile pour laquelle le procédé de commande trouve une application avantageuse. Toutefois, on rappelle que l'invention s'applique pour des groupes motopropulseurs à motorisation hybride hydraulique/air comprimé, tout électrique ainsi que motorisation thermique seule. On précise maintenant la portée de plusieurs termes utilisés dans la description. Une machine de traction peut être un moteur thermique, une machine électrique, une machine hydraulique ou machine à air comprimé. Un moyen de couplage est organe de transmission de couple permettant l'accouplage et le découplage d'une machine de traction à un train de roues d'une chaine cinématique d'un véhicule, tels un dispositif d'embrayage, une boite de vitesses, ou un dispositif de crabotage. Enfin, une demande d'état de couplage concerne soit une demande d'ouverture, dite également de découplage, soit une demande de fermeture, dite également d'accouplage, du moyen de couplage. De plus, on notera que dans le cas d'une boite de vitesses, une demande d'ouverture correspond à une position neutre et une demande de fermeture à la position d'engagement d'un des rapports de vitesses.

Le groupe motopropulseur hybride 1 comporte un premier module de traction MDAV relié mécaniquement au train de roues avant et un deuxième module de traction MDAR relié mécaniquement au train de roues arrière. Le premier module de traction MDAV comporte un moteur thermique 10, un dispositif d'embrayage 11 reliant une machine électrique de traction avant 12 au moteur thermique 10 et une boite de vitesses 13 dont l'axe de sortie est relié mécaniquement au train de roues avant. Le deuxième module de traction MDAR comporte une machine électrique de traction arrière 16 reliée mécaniquement au train de roues arrière par l'intermédiaire d'un dispositif de crabotage 17. Le groupe motopropulseur 1 comporte également un accumulateur d'énergie électrique 15 fonctionnant à une tension de plusieurs centaines de volts (par exemple 220 Volts). L'accumulateur 15 est destiné à fournir et à recevoir de l'énergie électrique à destination et en provenance des machines électriques avant et arrière 12, 16.

Le groupe motopropulseur 1 comporte également une unité de commande 18 en charge de coordonner les organes du groupe motopropulseur afin de configurer la chaine cinématique du groupe motopropulseur dans les différents modes de roulage permis par cette architecture, soit dans cette variante un mode de roulage thermique, un mode de roulage entièrement électrique (par la machine avant 12 et/ou la machine électrique arrière 16), un mode de roulage hybride économe et un mode de roulage sportif privilégiant les performances de l'ensemble des machines de traction (moteur thermique 10 et machines électriques 12, 16).

En particulier, l'unité de commande 18 est en charge d'exécuter le procédé de commande de l'état de couplage des moyens de couplage du véhicule, ici l'état de couplage du dispositif d'embrayage 11, l'état de couplage de la boite de vitesse 13 et l'état de couplage du dispositif de crabotage 17. L'unité de commande est représentée ici schématiquement par un unique calculateur à circuits intégrés, toutefois il est envisageable que les fonctions de pilotage du groupe motopropulseur 1 soient distribuées entre plusieurs calculateurs, parmi lesquels le calculateur du moteur thermique 10, de la boite de vitesses 13, de la machine électrique 12 ou encore de la machine électrique 16. La distribution fonctionnelle et logicielle des fonctions de pilotage, en particulier la fonction en charge du procédé de commande d'état de couplage des moyens de couplage, n'est aucunement limitative de l'invention. On ajoutera que l'unité de commande 18 peut être un circuit électronique de traitement numérique ou analogique.

Plus précisément, le dispositif d'embrayage 11 et le dispositif de crabotage 17 sont pilotés par un signal de commande d'état de couplage résultant d'un module de pilotage recevant en entrée une ou plusieurs demandes d'état de couplage simultanément. Le déclenchement d'une demande d'état de couplage est conditionnée de manière connue en soi, à une valeur de consigne de couple moteur à transmettre aux roues par une machine de traction par rapport à une valeur de seuil de couplage prédéterminé en N.m, à une valeur de vitesse du véhicule par rapport à un seuil de vitesse (par exemple le couplage d'une machine électrique est systématique sous une valeur de vitesse prédéterminée), à une valeur de régime, ou encore par rapport à l'état d'un signal représentatif du mode de roulage sélectionné (par exemple le couplage est systématique lorsqu'un mode de roulage tout électrique est enclenché).

Typiquement, la boite de vitesses 13 est quant à elle pilotée par un signal de commande d'état de couplage issu d'une demande d'engagement d'un rapport de vitesses. Une demande d'un rapport neutre commande une demande d'ouverture des éléments de couplage entre l'arbre primaire et l'arbre secondaire, tandis qu'une demande d'engagement d'un des rapports de vitesses commande une demande de fermeture des éléments de couplage entre l'arbre primaire et l'arbre secondaire dudit rapport demandé.

Quel que soit le moyen de couplage concerné, les demandes d'ouverture et de fermeture sont opérées par le pilotage d'un actionneur agencé pour déplacer un organe d'accouplement, tels un crabot, un baladeur de boite de vitesses ou une butée d'embrayage. De plus, un capteur de position de l'actionneur est agencé pour déterminer l'état de couplage piloté du moyen de couplage.

La figure 3 représente un module de pilotage 30 du dispositif de crabotage 17 du module de traction arrière du véhicule. Selon ce mode de réalisation, le module de pilotage 30 comporte un premier sous-module 31 qui exécute une première fonction de pilotage pour commander l'état de couplage et émet une demande d'état de couplage 32 vers un deuxième sous-module de synthèse 37 en charge d'émettre la commande 38 de positionnement d'un actionneur 171 du moyen de couplage 17.

Le premier sous-module 31 reçoit en entrée des demandes d'état de couplage déclenchées en fonction d'une consigne de couple à transmettre de la machine électrique arrière aux roues par rapport à des seuils de couplage prédéterminés enregistrés en mémoire de l'unité de commande. La demande d'état de couplage 32 est un signal logique et est le résultat d'une fonction logique, par exemple fonction « OU » entre les demandes d'état de couplage en entrée du sous-module 31 dans lesquelles un état booléen haut code pour l'état fermé et l'état booléen bas code pour l'état ouvert.

De plus, pour assurer la stabilité de la demande d'état de couplage 32, pour chaque demande d'état de couplage un premier paramètre de validation est calculé par l'unité de commande en fonction de l'instant de détection d'une demande. La confirmation de chaque demande est alors conditionnée au respect d'un premier critère de validation prédéterminé par le premier paramètre de validation.

De plus, selon l'invention pour éviter les oscillations de courte durée, le premier sous-module 31 reçoit en entrée la valeur de l'état de couplage piloté du dispositif de crabotage 17. Dans la variante représentée en figure 3 correspondant à un premier mode de détermination de l'état de couplage piloté, ce dernier est déterminé à partir de la valeur de la consigne logique du signal de commande 38 de positionnement de l'actionneur 171 du moyen de couplage 17. Il est également prévu que, dans un deuxième mode, la valeur du signal de mesure d'un capteur 172 de la position de l'actionneur 171 soit directement mesurée pour déterminer si le moyen de couplage 17 est en position d'état ouvert, en position d'état fermé, ou dans un état de couplage intermédiaire entre l'état ouvert et l'état fermé.

On notera que la détermination de l'état de pilotage en fonction de la valeur du signal de commande 38 a pour avantage de déterminer l'état de couplage piloté indépendamment de la position physique l'actionneur du moyen de couplage. Il peut être prévu que le premier et deuxième mode de détermination soient opérés complémentairement.

Par ailleurs, un troisième et un quatrième sous-module 33, 34 exécutent respectivement une troisième et quatrième fonction de pilotage pour commander l'état de couplage et transmettent des demandes d'état de couplage 35, 36 au deuxième sous-module de synthèse 37. Ce dernier détermine la valeur du signal de commande 38 en fonction des trois demandes 32, 35, 36. Le troisième et quatrième sous-modules 33, 34 pilotent par exemple l'état de couplage en fonction de la vitesse du véhicule par rapport à un seuil de vitesses ou en fonction d'un signal issu d'une molette de sélection d'un mode de roulage. Par exemple, si un mode de roulage entièrement électrique (couramment désigné par l'acronyme ZEV pour « Zero Emission Vehicle » en anglais) est commandé, une stratégie énergétique du groupe motopropulseur prévoit que le moteur thermique du groupe motopropulseur est systématiquement découplé de la chaîne cinématique et que la machine électrique arrière est systématiquement accouplée. Des sous-modules additionnels sont bien entendu envisageables pour transmettre des demandes d'état de couplage au deuxième sous-module de synthèse 37. De même que pour le premier sous-module 31, pour assurer la stabilité des demandes issues du troisième et quatrième sous-modules 33, 34, ces dernières sont de préférence confirmées lorsque des deuxième et troisième paramètres de validation respectent des deuxièmes et troisièmes critères de validation prédéterminés. Les premier, deuxième et troisième paramètres de validation peuvent être identiques ou distincts.

Le module de pilotage de la figure 3 est un mode de réalisation préférentiel pour piloter le dispositif de crabotage du module de traction arrière. Conventionnellement, le dispositif d'embrayage et la boite de vitesses du module de traction avant sont pilotés par des modules de pilotage spécifiques émettant des consignes de commande d'un actionneur de position des moyens de couplage en fonction de demandes d'état de couplage. Selon la technologie choisie, ces consignes pilotent une position de couplage de type tout ou rien, ou de manière graduée entre les positions d'état ouvert et d'état fermé.

Par ailleurs, il est courant qu'un module de pilotage d'un moyen de couplage exécute une séquence prédéterminée du couplage de la machine de traction au train de roues. Le module de pilotage est alors programmé de manière à piloter une pluralité d'états de pilotage prédéterminés séquentiels s'exécutant pour un cycle d'ouverture et de fermeture, par exemple de façon connue en soi par des états de pilotage prédéterminés d'état ouvert, d'état fermé et des états transitoires, tels de synchronisation/désynchronisation en régime des arbres à accoupler/désaccoupler ou d'engagement/désengagement en translation d'un actionneur. Chacun des états prédéterminés est détectable en fonction d'un signal numérique codant un mode de pilotage de la machine de traction, ou bien encore en fonction d'une variable interne du module de pilotage pour représenter les différents états de pilotage séquentiels par lesquels passe le moyen de couplage lors d'un cycle d'ouverture et de fermeture. Ces états de pilotage peuvent être au nombre de trois états ou plus selon le cycle.

Par exemple, un état de pilotage de synchronisation en régime peut consister à commander un mode de régulation en régime d'un arbre moteur en fonction d'une consigne de régime, un état de pilotage d'asservissement en couple peut consister à commander un mode de régulation en couple de la machine de traction, ou encore un état d'engagement d'un actionneur peut consister à commander en translation ledit actionneur. Des états de pilotage prédéterminés complémentaires peuvent être compris dans une séquence d'ouverture ou fermeture selon la technologie du moyen de couplage.

Ainsi, dans un troisième mode de détermination de l'état de couplage piloté, à l'instant de la détection d'une demande, l'état de couplage est alors avantageusement déterminé en détectant quel état de pilotage est en cours d'exécution parmi la pluralité desdits état de pilotage prédéterminés séquentiels en fonction d'un signal numérique et/ou d'une variable d'un module de pilotage qualifiant l'état de pilotage. Grâce à cette variante, le procédé de commande est en mesure de tirer profit d'une information plus précise par rapport à l'information obtenue par un capteur de position ou une consigne logique, en particulier lorsque celui-ci est piloté dans un état de pilotage transitoire vers l'état de couplage cible d'une demande. La détermination de l'état de pilotage est ainsi avantageusement indépendante de l'état physique du moyen de couplage.

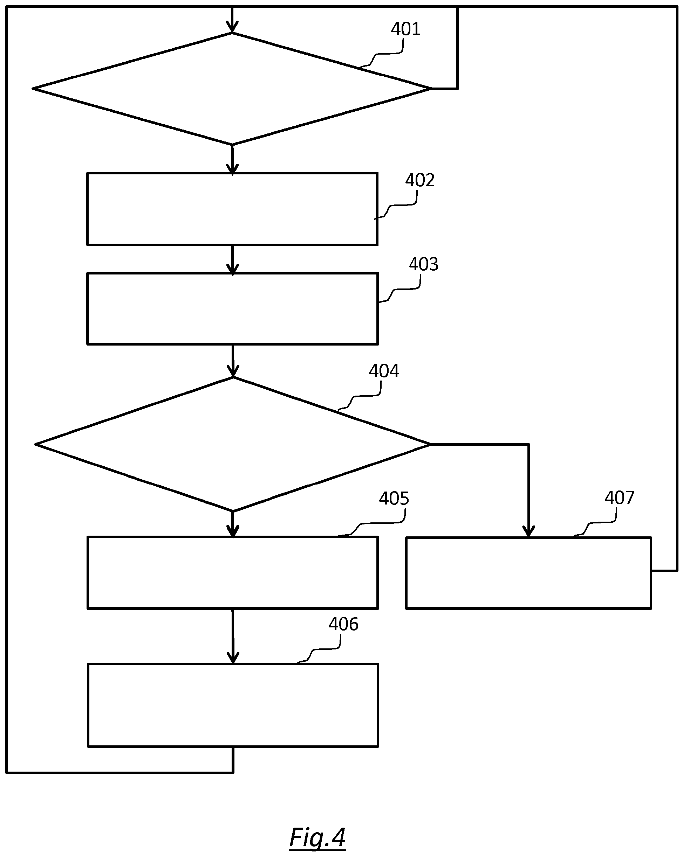

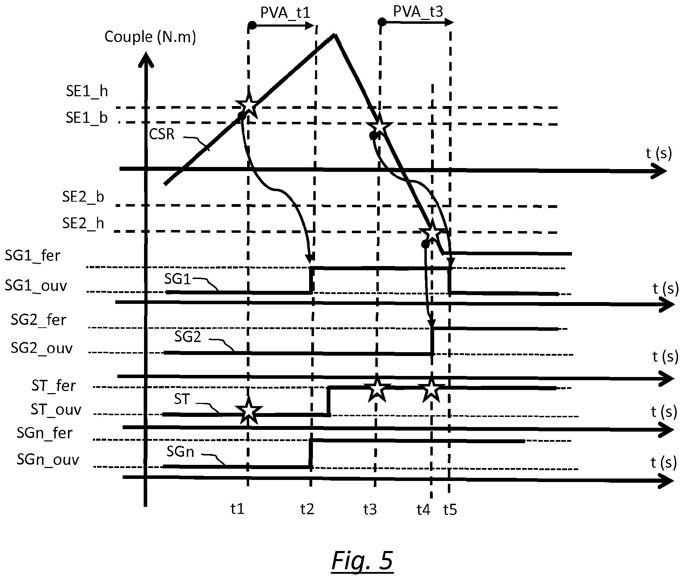

On décrit maintenant la figure 4 pour illustrer un algorithme du procédé de commande de l'état de couplage d'une machine de traction au train de roues. Ce procédé est apte à être exécuté par l'unité de commande pour piloter l'état de couplage du dispositif d'embrayage, de la boite de vitesses et du dispositif de crabotage. La description de la figure 4 est accompagnée de la figure 5 qui représente similairement à la figure 1 la même séquence de roulage en consigne de couple et l'état des demandes de couplage et du signal de commande final. Comme on le verra, le phénomène d'oscillation indésirable présent dans le cas de la figure 1 est cette fois éliminé grâce à l'invention. On précise que les références utilisées dans la figure 5 correspondent aux mêmes éléments informatifs utilisés pour la figure 1. Et, identiquement à la figure 1, la séquence de roulage présente un gradient de couple élevé et le franchissement de plusieurs seuils de couplage successivement par la consigne de couple aux roues. On rappelle que les signaux SG1, SG2, SGn sont des signaux logiques codant par convention à l'état haut un état fermé et à l'état bas un état ouvert du moyen de couplage. Il est bien entendu possible que ces signaux codent inversement un état ouvert à l'état haut et un état fermé à l'état bas. Le signal ST représente l'état de couplage piloté représenté par le signal de mesure du capteur de position de l'actionneur du moyen de couplage. Le signal ST est ici représenté comme un signal logique codant par convention à l'état haut un état fermé et à l'état bas un état ouvert du moyen de couplage. Le signal ST peut tout aussi bien être un signal numérique codant de plus un ou plusieurs états intermédiaires entre l'état fermé et l'état ouvert par des valeurs distinctes.

Selon le procédé de commande d'état de couplage, à une première étape 401, l'unité de commande du groupe motopropulseur vérifie en continu la valeur de la consigne de couple aux roues CSR à appliquer par une ou des machines de traction par rapport aux seuils de couplage prédéterminés SE1_b, SE1_h, SE2_b, SE2_h.

En se rapportant au graphique de la figure 5, les étoiles indiquent pour la séquence de roulage des instants de détection tx pour lesquels le procédé détecte des demandes d'ouverture et de fermeture, indiquées ici aux instants t1, t3 et t4. Le procédé s'exécutera conformément à l'algorithme de la figure 4 pour chaque demande d'état de couplage cible détectée lors du roulage. A un instant tx, le procédé comporte donc une étape de détection 402 d'une demande d'état de couplage cible SGi_cib.

A l'instant t1 une demande de fermeture SG1_fer est détectée suite au franchissement du seuil SE1_h, à l'instant t3 une demande d'ouverture SG1_ouv suite au franchissement du seuil SE1_b, puis à l'instant t4 une demande de fermeture SG2_fer suite au franchissement du seuil SE2_h. La demande de fermeture SG1_fer et la demande d'ouverture SG1_ouv sont pilotées par le signal SG1 et la demande de fermeture SG2_fer est pilotée par le signal SG2.

Puis, le procédé comporte une étape de détermination 403 de l'état de couplage piloté ST_tx du moyen de couplage à l'instant tx de la détection de chacune desdites demandes. En référence à la figure 3 du module de pilotage, l'état de couplage piloté ST_tx représenté temporellement par le signal ST sur la figure 5 est déterminé à partir de la consigne logique du signal de commande final 38, ou à partir du signal de mesure du capteur 172 de position de l'actionneur 171 du moyen de couplage 17. L'état de couplage piloté ST_tx peut être un état ouvert (ST_ouv ou SGn_ouv), comme c'est le cas à l'instant t1, ou un état fermé (ST_fer ou SGn_fer), comme c'est le cas aux instants t3, t4.

On notera que l'état de couplage du moyen de couplage est opérable selon trois états de couplage prédéterminés pouvant être état ouvert, un état fermé et un état intermédiaire entre l'état ouvert et l'état fermé. La détermination 403 de l'état de couplage piloté ST_tx peut donc consister à détecter l'état de couplage en cours d'exécution parmi ces trois états, soit par la mesure de la position de l'actionneur à partir d'un signal apte à qualifier chacun des états, soit par la détection de l'état de pilotage commandé par le module de pilotage à partir de la valeur du signal numérique du mode de pilotage de la machine de traction et/ou à partir de la valeur de la variable interne du module de pilotage.

Lorsque le couplage d'une machine de traction est piloté en fonction d'une pluralité d'états de pilotage prédéterminés séquentiels pour atteindre l'état de couplage cible SGI_cib, alors conformément au troisième mode de détermination plus précis, la détermination 403 de l'état de couplage piloté ST_tx consiste à détecter l'état de pilotage qui est en cours d'exécution parmi lesdits états de pilotage prédéterminés. La détection est opérable à partir de la valeur du signal numérique du mode de pilotage de la machine de traction et/ou à partir de la valeur de la variable interne du module de pilotage dont les valeurs sont aptes à qualifier chacun des états de pilotage du moyen de couplage. De plus, selon ce mode un état de pilotage transitoire est associé à un état cible pour autoriser ou non la demande dès l'instant de la détection de ladite demande. Par exemple, lorsque le procédé détecte que le dispositif de crabotage est commandé par l'état de synchronisation en régime ou par l'état d'engagement de l'actionneur 171, bien que le dispositif de crabotage est physiquement ouvert, le procédé de commande considère avantageusement que l'état de couplage piloté est un état fermé. A l'inverse, lorsque le procédé détecte que le dispositif de crabotage est commandé par l'état de désengagement de l'actionneur 171, bien que le dispositif de crabotage est physiquement fermé, le procédé de commande considère avantageusement que l'état de couplage piloté est un état ouvert. On ajoutera que ce troisième mode est préférentiellement appliqué pour le pilotage de l'état de couplage de la boite de vitesses pour laquelle le pilotage est généralement séquencé par des états prédéterminés.

Ensuite, le procédé comporte alors une étape 404 de comparaison de l'état de couplage piloté ST tx à l'instant tx avec l'état de couplage cible SGI_cib de la demande de couplage.

Puis à une étape 407, la commande de ladite demande est autorisée dès l'instant tx de la détection de ladite demande lorsque l'état de couplage piloté ST_tx à l'instant tx de la détection est identique à l'état de couplage cible SGI_cib de la demande de couplage.

A contrario, lorsque l'état de couplage piloté ST_tx est différent de l'état de couplage cible SGI_cib, alors le procédé comporte une étape de calcul 405 d'un paramètre de validation PVA_tx de ladite demande à partir de l'instant tx. L'étape de la commande 406 de ladite demande est autorisée à partir de l'instant que le paramètre de validation PVA_tx respecte un critère de validation prédéterminé PVA_tx. Les étapes 405 et 406 adressent particulièrement les changements d'états de couplage, en particulier les cas lorsqu'une demande d'ouverture est détectée et l'état de couplage piloté est un état fermé, ou lorsqu'une demande de fermeture est détectée et l'état de couplage piloté est un état ouvert.

Par exemple, l'étape de calcul 405 comporte une première étape de calcul d'une durée depuis laquelle la consigne de couple CSR a franchi le seuil de couplage prédéterminé à l'origine de la détection de la demande, et/ou une deuxième étape de calcul d'une intégrale temporelle de la valeur absolue de l'écart entre la consigne de couple CSR et le seuil de couplage prédéterminé à l'origine de la détection de la demande. La demande est alors confirmée lorsque la durée est supérieure à une valeur prédéterminée enregistrée en mémoire de l'unité de commande. Alternativement ou en complément, la demande est confirmée lorsque la valeur absolue de l'intégrale temporelle est supérieure à une valeur prédéterminée enregistrée en mémoire de l'unité de commande. On ajoute que d'autres protocoles de confirmation d'une demande d'état de couplage peuvent être prévus sans sortir du cadre de l'invention.

Le procédé prévoit néanmoins d'autres cas autorisant la commande 407 de la demande de couplage dès l'instant tx de la détection de ladite demande. Dans une situation alternative, lorsque l'état de couplage en cours d'exécution est un état intermédiaire entre un état ouvert et un état fermé, la commande 407 de ladite demande est autorisée dès l'instant tx. Ou bien encore, lorsqu'un desdits états de pilotage prédéterminés détectés à l'étape 403 est un état de pilotage transitoire à partir d'un état de couplage initial (état ouvert/fermé) vers l'état de couplage cible SGi_cib (état fermé/ouvert) d'une demande, la commande 407 de ladite demande est autorisée dès l'instant tx. Dans cette situation alternative, on considère qu'un état intermédiaire ou transitoire est assimilé à l'état de couplage cible.

Revenons maintenant à l'exemple du graphique de la figure 5 pour illustrer le déroulement du procédé de commande conformément à l'invention. Pour le cas de la demande d'état de couplage cible de fermeture SG1_fer qui est détectée à l'instant t1, l'unité de commande détecte qu'à ce même instant le moyen de couplage est positionné dans un état ouvert ST_ouv. L'état de couplage cible étant différent de l'état de couplage piloté, l'unité de commande procède donc au calcul d'un ou plusieurs paramètres de validation PVA_t1 à partir de cet instant t1 et autorise la demande de fermeture SG1_fer à l'instant t2 une fois que le/les paramètre/s de validation ont été confirmés. Le signal SG1 passe de l'état ouvert à l'état fermé à l'instant t2. La consigne finale SGn en sortie du module de pilotage passe alors à l'état haut à l'instant t2.

Pour le cas de la demande d'état de couplage cible d'ouverture SG1_ouv qui est détectée à l'instant t3, l'unité de commande détecte qu'à ce même instant le moyen de couplage est positionné dans un état fermé ST_fer. L'unité de commande procède alors au calcul d'un ou plusieurs paramètres de validation PVA_t3 à partir de cet instant t3. L'autorisation de la demande d'ouverture SG1_ouv est commandée à l'instant t5 une fois que le/les paramètre/s de validation ont été confirmés. Le signal SG1 passe de l'état fermé à l'état ouvert à l'instant t5. Cependant, à cet instant t5 le signal SGn reste à l'état haut du fait que le signal SG2 est à l'état haut.

Le cas de la demande d'état de couplage cible de fermeture SG2_fer qui est détectée à l'instant t4 diffère cette fois des deux cas précédents. En effet, l'unité de commande détecte qu'à l'instant t4 le moyen de couplage est déjà positionné dans un état fermé ST_fer identique à l'état de couplage cible de la demande. L'autorisation de la demande de fermeture détectée à l'instant t4 est alors commandée dès l'instant t4 sans que l'unité de commande procède au calcul du/des paramètres de validation. Le signal SG2 passe donc de l'état ouvert à l'état fermé dès l'instant t4. Le procédé évite ainsi avantageusement l'apparition d'un état transitoire de courte durée au niveau de la consigne finale SGn résultant de la demande d'ouverture SG1_ouv en cours de confirmation.

Enfin dans un autre cas non représenté par la figure 5, si une demande d'état de couplage cible d'ouverture est détectée à un instant tx, et que le moyen de couplage est déjà positionné dans un état ouvert, alors l'autorisation de la demande d'ouverture est commandée dès cet instant tx sans que l'unité de commande procède au calcul du/des paramètres de validation.

L'invention s'applique aux groupes motopropulseurs hybrides comprenant un ou plusieurs moyens de couplage. Il est envisageable que la variante de réalisation du procédé varie entre les moyens de couplage du groupe motopropulseur. Par exemple, la détermination de l'état de couplage piloté d'un dispositif de crabotage est préférentiellement réalisée à partir de l'information issue du signal de commande de la consigne logique de l'actionneur ou issue d'un capteur de position d'un actionneur. Tandis que dans le cas d'une boite de vitesse ou d'un embrayage il sera préféré de détecter l'état de couplage piloté à partir de l'état de pilotage commandé par le module de pilotage de l'unité de commande afin d'obtenir une information plus précise de la séquence en cours d'exécution si l'état de couplage est incertain.

## Revendications

1. Procédé de commande de l'état de couplage (ST) d'une machine de traction (10 ;12 ;16) d'un véhicule automobile à un train de roues du véhicule, le procédé comportant la détection (402) d'une demande d'un état de couplage cible (SGi_cib) à un instant (tx), le procédé étant **caractérisé en ce qu'**il comporte en outre les étapes de :
- la détermination (403) de l'état de couplage piloté (ST_tx) de la machine de traction (10 ;12 ; 16) au train de roues à l'instant (tx) de la détection de ladite demande et,
- la commande (407) de ladite demande est autorisée dès l'instant (tx) de la détection de ladite demande lorsque l'état de couplage piloté (ST_tx) à l'instant (tx) de la détection est identique à l'état de couplage cible (SGi_tx) de ladite demande.

2. Procédé selon la revendication 1, **caractérisé en ce que**, lorsque l'état de couplage piloté (ST_tx) est différent de l'état de couplage cible (SGi_tx), alors le procédé comporte en outre le calcul (405) d'un paramètre de validation (PVA_tx) de ladite demande d'état de couplage cible (SGi_cib) et la commande (406) de ladite demande est autorisée à partir de l'instant que le paramètre de validation (PVA_tx) respecte un critère de validation prédéterminé (PVA_tx).

3. Procédé selon la revendication 1 ou 2, dans lequel le couplage de la machine de traction (10 ;12 ;16) au train de roues est opérable selon trois états de couplage prédéterminés pouvant être un premier état ouvert, un deuxième état fermé et un troisième état intermédiaire entre le premier et deuxième état, **caractérisé en ce que** la détermination (403) de l'état de couplage piloté (ST_tx) à l'instant (tx) de la détection de ladite demande consiste à détecter l'état de couplage en cours d'exécution parmi les premier, deuxième et troisième états.

4. Procédé selon la revendication 3, **caractérisé en ce que**, lorsque l'état de couplage en cours d'exécution est le troisième état intermédiaire, la commande (407) de ladite demande est autorisée dès l'instant (tx) de la détection de ladite demande.

5. Procédé selon l'une quelconque des revendications 1 à 4, **caractérisé en ce que** l'état de couplage piloté (ST tx) à l'instant (tx) de la détection de ladite demande est déterminé à partir du signal de mesure d'un capteur (172) de position d'un actionneur (171) pilotant le couplage de la machine de traction (10 ;12 ;16) au train de roues.

6. Procédé selon la revendication 1 ou 2, dans lequel le couplage de la machine de traction (10 ;12 ;16) au train de roues est piloté par un module de pilotage en fonction d'une pluralité d'états de pilotage prédéterminés séquentiels pour atteindre l'état de couplage cible (SGi_cib), **caractérisé en ce que** la détermination (403) de l'état de couplage piloté (ST_tx) à l'instant (tx) de la détection de ladite demande consiste à détecter l'état de pilotage prédéterminé qui est en cours d'exécution parmi lesdits états de pilotage prédéterminés.

7. Procédé selon la revendication 6, **caractérisé en ce que**, lorsque l'état de pilotage prédéterminé en cours d'exécution est un état de pilotage transitoire vers l'état de couplage cible (SGi_cib), la commande (407) de ladite demande est autorisée dès l'instant (tx) de la détection de ladite demande.

8. Procédé selon l'une quelconque des revendications 1 à 2, **caractérisé en ce que** l'état de couplage piloté (ST_tx) à l'instant (tx) de la détection de ladite demande est déterminé à partir d'une consigne d'un signal de commande (38) de positionnement d'un actionneur (171) opérant le couplage de la machine de traction (10 ;12 ;16) au train de roues.

9. Procédé selon la revendication 8, **caractérisé en ce que** le signal de commande (38) est un signal logique codant un état ouvert et un état fermé.

10. Véhicule automobile **caractérisé en ce qu'**il comporte une unité de commande comportant des moyens de mettre en oeuvre le procédé de commande selon l'une quelconque des revendications 1 à 9.

## Patentansprüche

1. Verfahren zum Steuern des Kopplungszustands (ST) einer Traktionsmaschine (10; 12; 16) eines Kraftfahrzeugs mit einem Radsatz des Fahrzeugs, wobei das Verfahren das Erfassen (402) einer Anforderung eines Soll-Kopplungszustands ( SGi_cib) zu einem Zeitpunkt (tx), wobei das Verfahren **dadurch gekennzeichnet ist, dass** es ferner die folgenden Schritte umfasst:
- die Bestimmung (403) des kontrollierten Kopplungszustands (ST_tx) der Traktionsmaschine (10; 12; 16) mit dem Radsatz zum Zeitpunkt (tx) der Detektion der Anforderung und,
- Die Steuerung (407) der Anfrage wird ab dem Zeitpunkt (tx) der Erfassung der Anfrage autorisiert, wenn der kontrollierte Kopplungszustand (ST_tx) zum Zeitpunkt (tx) der Erfassung identisch mit dem Zustandszielkopplung (SGi_tx) der Anfrage ist .

2. Verfahren nach Anspruch 1, **dadurch gekennzeichnet, dass**, wenn sich der gesteuerte Kopplungszustand (ST_tx) von dem Soll-Kopplungszustand (SGi_tx) unterscheidet, das Verfahren ferner die Berechnung (405) einer Validierung (PVA_tx) des Soll-Kopplungszustands umfasst Anfrage (SGi_cib) und die Steuerung (406) der Anfrage ab dem Moment autorisiert wird, in dem der Validierungsparameter (PVA_tx) ein vorbestimmtes Validierungskriterium (PVA_tx) respektiert.

3. Verfahren nach Anspruch 1 oder 2, bei dem die Kopplung der Traktionsmaschine (10; 12; 16) mit dem Räderwerk gemäß drei vorbestimmten Kopplungszuständen betreibbar ist, die ein erster offener Zustand, ein zweiter geschlossener Zustand und ein dritter sein können Zwischenzustand zwischen dem ersten und zweiten Zustand, **dadurch gekennzeichnet, dass** die Bestimmung (403) des Zustands der kontrollierten Kopplung (ST_tx) zum Zeitpunkt (tx) der Erfassung der besagten Anforderung darin besteht, den Kopplungszustand zu erfassen, indem man zwischen den ersten, Zweiter und dritter Staat.

4. Method according to Claim 3, **characterized in that**, when the coupling state being executed is the third intermediate state, the control (407) of the said request is authorized from the instant (tx) of the detection of the said request.

5. Verfahren nach einem der Ansprüche 1 bis 4, **dadurch gekennzeichnet, dass** der gesteuerte Kopplungszustand (ST_tx) zum Zeitpunkt (tx) der Detektion der besagten Anforderung aus dem Messsignal einer Sensorposition (172) eines Aktuators ermittelt wird (171) zur Steuerung der Ankopplung der Traktionsmaschine (10; 12; 16) an den Radsatz.

6. Verfahren nach Anspruch 1 oder 2, bei dem die Kopplung der Traktionsmaschine (10; 12; 16) mit dem Räderwerk von einem Steuermodul gemäß einer Vielzahl von sequentiellen vorbestimmten Steuerzuständen gesteuert wird, um den Soll-Kopplungszustand (SGi_cib) zu erreichen), **dadurch gekennzeichnet, dass** die Bestimmung (403) des gesteuerten Kopplungszustands (ST_tx) zum Zeitpunkt (tx) der Erfassung der Anforderung darin besteht, den vorbestimmten gesteuerten Zustand zu erfassen, der unter den vorbestimmten Fahrzuständen läuft.

7. Verfahren nach Anspruch 6, **dadurch gekennzeichnet, dass**, wenn der vorbestimmte Steuerzustand während der Ausführung ein Übergangssteuerzustand in Richtung des Zielkopplungszustands (SGi_cib) ist, die Steuerung (407) der Anforderung ab dem Moment (tx) des autorisiert wird Erkennung von besagte Bitte.

8. Verfahren nach einem der Ansprüche 1 bis 2, **dadurch gekennzeichnet, dass** der geregelte Kupplungszustand (ST_tx) zum Zeitpunkt (tx) der Detektion der besagten Anforderung aus einem Sollwert einer Signalsteuerung (38) zur Positionierung eines Aktuators ermittelt wird (171) Betätigung der Kupplung der Zugmaschine (10; 12; 16) zum Radsatz.

9. Verfahren nach Anspruch 8, **dadurch gekennzeichnet, dass** das Steuersignal (38) ein logisches Signal ist, das einen offenen Zustand und einen geschlossenen Zustand codiert.

10. Kraftfahrzeug, **dadurch gekennzeichnet, dass** es eine Steuereinheit umfasst, die Mittel zum Ausführen des Steuerverfahrens nach einem der Ansprüche 1 bis 9 umfasst.

## Claims

1. Method for controlling the state of coupling (ST) of a traction machine (10; 12; 16) of a motor vehicle to a wheel set of the vehicle, the method comprising the detection (402) of a request of a target coupling state (SGi_cib) at a time (tx), the method being **characterized in that** it further comprises the steps of:
- the determination (403) of the controlled coupling state (ST_tx) of the traction machine (10; 12; 16) to the wheel set at the instant (tx) of the detection of said request and,
- control (407) of said request is authorized from the instant (tx) of detection of said request when the controlled coupling state (ST_tx) at the instant (tx) of detection is identical to the state target coupling (SGi_tx) of said request.

2. Method according to Claim 1, **characterized in that**, when the controlled coupling state (ST_tx) is different from the target coupling state (SGi_tx), then the method further comprises the calculation (405) of a validation (PVA_tx) of said target coupling status request (SGi_cib) and the control (406) of said request is authorized from the moment that the validation parameter (PVA_tx) respects a predetermined validation criterion (PVA_tx) .

3. Method according to claim 1 or 2, in which the coupling of the traction machine (10; 12; 16) to the wheel train is operable according to three predetermined coupling states which can be a first open state, a second closed state and a third intermediate state between the first and second state, **characterized in that** the determination (403) of the controlled coupling state (ST_tx) at the instant (tx) of the detection of the said request consists in detecting the coupling state by running among the first, second and third states.

4. Method according to Claim 3, **characterized in that**, when the coupling state being executed is the third intermediate state, the control (407) of the said request is authorized from the instant (tx) of the detection of the said request.

5. Method according to any one of Claims 1 to 4, **characterized in that** the controlled coupling state (ST_tx) at the instant (tx) of the detection of the said request is determined from the measurement signal of a sensor (172) position of an actuator (171) controlling the coupling of the traction machine (10; 12; 16) to the wheel set.

6. Method according to claim 1 or 2, in which the coupling of the traction machine (10; 12; 16) to the wheel train is controlled by a control module according to a plurality of sequential predetermined control states to achieve the target coupling state (SGi_cib), **characterized in that** the determination (403) of the piloted coupling state (ST_tx) at the instant (tx) of the detection of said request consists in detecting the piloting state predetermined which is running among said predetermined driving states.

7. Method according to Claim 6, **characterized in that**, when the predetermined control state during execution is a transient control state towards the target coupling state (SGi_cib), the control (407) of the said request is authorized from the moment (tx) of the detection of said request.

8. Method according to any one of Claims 1 to 2, **characterized in that** the controlled coupling state (ST_tx) at the instant (tx) of the detection of the said request is determined from a setpoint of a signal control (38) for positioning an actuator (171) operating the coupling of the traction machine (10; 12; 16) to the wheel set.

9. Method according to Claim 8, **characterized in that** the control signal (38) is a logic signal encoding an open state and a closed state.

10. Motor vehicle **characterized in that** it comprises a control unit comprising means for implementing the control method according to any one of Claims 1 to 9.
